# EUROPEAN PATENT SPECIFICATION

(11) **EP 3 264 195 B1**
(45) Date of publication and mention of the grant of the patent: **09.09.2020**
(21) Application number: 17176746.0
(22) Date of filing: 19.06.2017
(51) Int. Cl.: G03G 15/22, B33Y 10/00, B33Y 30/00, B29C 64/153, B29C 64/241, B29C 64/223

(54) **MULTISIZE PRINTING MATERIAL FOR ELECTROPHOTOGRAPHIC ADDITIVE MANUFACTURING**
DRUCKMATERIAL IN VERSCHIEDENEN GRÖSSEN FÜR ELEKTROPHOTOGRAPHISCHE GENERATIVE FERTIGUNG
MATÉRIAU D'IMPRESSION À TAILLE MULTIPLE DE FABRICATION D'ADDITIFS ÉLECTROPHOTOGRAPHIQUES

(30) Priority: 27.06.2016 US 201615194419
(43) Date of publication of application: 03.01.2018
(73) Proprietor: Xerox Corporation, Rochester, NY 14644 (US)
(72) Inventor: ZONA, Michael F., Webster, NY New York 14580 (US); NOWAK, William J., Webster, NY New York 14580 (US); ALVAREZ, Jorge A., Webster, NY New York 14580 (US); MCCONVILLE, Paul J., Webster, NY New York 14580 (US); CLARK, Robert A., Williamson, NY New York 14589 (US)
(74) Representative: Gill Jennings & Every LLP

(56) References cited:
- JP-A- 2016 107 629
- US-A1- 2002 145 213
- US-A1- 2015 024 319
- US-A1- 2015 071 809
- US-B1- 8 119 053

## Description

### BACKGROUND

The present disclosure relates to electrophotography. In particular, the present disclosure relates to the use of electrophotography in additive manufacturing (3D printing).

Current powder materials used in additive manufacturing (3D printing) with electrophotographic (EP) engines, have average particle sizes from about 11 to about 50 microns. One method of additive manufacturing assembles parts with successive layers by transfusion of each layer on top of one another using heat and pressure. The "smoothness" and uniform thickness of each layer is important when trying to achieve tight tolerances for precision parts. Using the current particle size configurations voids and non-uniformity in the surface of the layers prevents smooth layer surface texture, leading to low part quality. Thus, there is a need to improve the materials and methods employed in additive manufacturing. JP 2016107629 discloses a method for manufacturing a three-dimensional molded objection including: forming particle images through an electrophotographic process, sequentially transferring the particles images to a layer bearing member and softening and subsequently solidifying the particle layer so as to fix the particle layer to a three-dimensional molded object. US 8,119,053 discloses a three-dimensional printer adapted to construct three-dimensional objects, the printer including a first surface adapted to receive a bulk layer of sinterable powder, a radiant energy source, and a transfer mechanism adapted to transfer or print a sintered image from the first surface to the object being assembled whilst fusing the sintered image to the object being assembled. US 2002/0145213 discloses a solid freeform fabrication method and related apparatus for fabricating a three-dimensional, multi-material or multi-colour object from successive layers of a primary body-building powder, at least a modifier powder and a binder powder, in accordance with a computer-aided design of the object. US 2015/0024319 discloses a part material for printing three-dimensional parts with an electrophotography-based additive manufacturing system, the part material including a composition having a copolymer, a charge control agent, and a heat absorber. The part material is provided in a powder form having a controlled particle size, and is configured for use in the electrophotography-based additive manufacturing system having a layer transfusion assembly for printing the three-dimensional parts in a layer-by-layer manner. US 2015/0071809 discloses a method for forming a three-dimensional article through successive fusion of parts of at least one layer of a powder bed provided on a work table.

### SUMMARY

According to the invention, there is provided a method of additive manufacturing according to claim 1.

According to the invention, there is also provided an additive manufacturing system according to claim 4.

### BRIEF DESCRIPTION OF DRAWINGS

Various embodiments of the present disclosure will be described herein below with reference to the figures wherein:
FIG. 1 shows a diagram of the fusion of a layer (build or support) with homogenous particle size.
FIG. 2 shows a diagram of the fusion of a layer (build or support) with two different particle sizes, in accordance with embodiments herein.
FIG. 3 shows a diagram of an additive manufacturing system for 3D printing, in accordance with embodiments herein.

### DETAILED DESCRIPTION

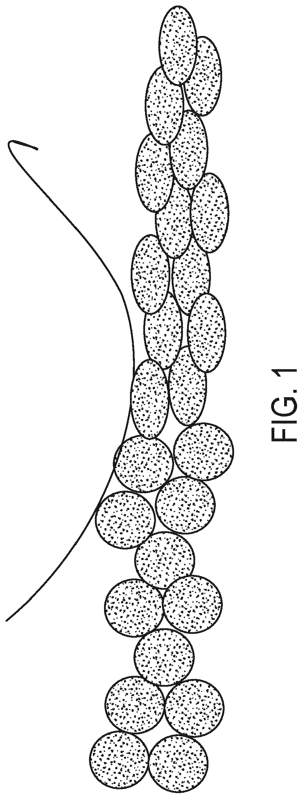

Embodiments herein employ electrophotography (EP) in additive manufacturing (3D printing) methods and systems as a means to print individual layers of a three dimensional part. In embodiments, systems may employ two xerographic engines, one for a build material and the other for a support material. Build materials comprise materials from which the final printed object is assembled. By contrast, support materials are temporary materials that are later removed and not part of the final printed object. Support materials are usually used to print overhang features and their use is necessitated by the bottom up layer by layer printing approach. Typical powdered materials for either the build or support material have average particle diameters ranging from about 11 to about 50 microns. To provide good development and transfer properties, the size distribution must be tight and stable to ensure uniform layer thickness. However, such large particle sizes create voids and non-uniformity in each layer as indicated in Figure 1. To ensure tight part tolerances, each layer must have a very smooth surface and uniform layer thickness. During a transfuse step, each layer that is transferred to a belt in a xerographic engine is fused to preceding layers on a movable gantry typically using heat and pressure. While using larger size particles is good for providing layers with desired target thickness of about 30 to about 40 microns, the large particle size creates voids in the fused layer that lead to problems with dimensional stability, especially as more and more layers are added to the part. Moreover, each layer should be smooth to provide good fusing during the transfuse step of the proceeding layers. The larger size particles prevent presentation of a smooth surface for adherence of the next layer.

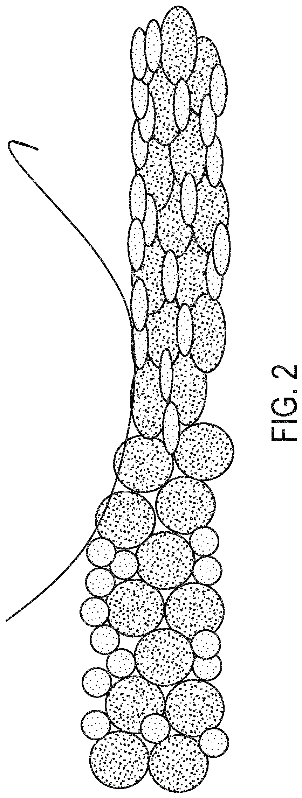

The voids shown in Figure 1 as the empty spaces between the circles on the left (before fusion) and the empty space between ovals on the right (after fusion) indicate the issue with employing a single large particle size. Embodiments herein provide methods of additive manufacturing via electrophotography according to the claims, using two different (disparate) particle sizes in xerographic engines to provide a more uniform layer and provide a means to achieve smooth build layer surfaces for optimal transfusing. The methods provide a first particle having a particle size in a range from about 10 microns to about 20 microns to build a thick part layer and then applying a second particle having a particle size smaller than the first particle. The particle size of the second particle is in a range from about 4 microns to about 8 microns. The second particle may advantageously fill in the inherent voids in the layer resulting in a very smooth finish on each layer, as shown in Figure 2 in which the void space is substantially reduced. Employing two particles with disparate sizes results in a superior transfuse process thereby providing uniform parts with tight tolerances.

In order to introduce the smaller particle sizes discussed above, the additive manufacturing system may provide separate electrophotographic (EP) engines for small particle build material and small particle support materials. Thus, there provided additional electrophotographic engines that are disposed in subsequent engines to deliver the smaller particles. The additional engines can be tailored to provide optimal xerographic set points for good development and transfer of the smaller sized particles and may be set differently from the engine using the larger size particles. Thus, in embodiments, a systems and methods disclosed herein may employ four xerographic engines in total: one engine for the larger build material, one for the smaller build material, one for the larger support material, and one for the smaller build material.

As the smaller particles are transferred to each layer, they provide a means to "fill-in" the voids created by the larger particles used in the previous engine. As indicated in Figure 2, during the transfuse step the layers that contain both large particles and small particles are more uniformly fused to each other and the surface of the layer is smooth so that adherence of subsequent layers is achieved more easily (including with less application of heat and/or pressure).

In embodiments, there are provided methods of additive manufacturing according to the claims, comprising forming a plurality of build layers, each of the plurality of build layers formed by transferring a first build material having a first particle size to form a first build material and transferring a second build material on the first build material to form one of the plurality of build layers, wherein a particle size of the second build material is smaller than the first build material, and wherein each transferring step is performed by a xerographic engine. The final transferred layer is then fused in a transfuse step to build a three dimensional part, layer by layer.

As used herein, "additive manufacturing" refers to a process that builds three-dimensional objects by adding layer-upon-layer of a build material. Although often associated with fused deposition modeling employing extrusion type techniques, embodiments herein employ xerographic techniques for each layer application. A further distinguishing feature of the present additive manufacturing methods and processes is the use of two different particles sizes of build material in each layer to improve the surface smoothness of each layer.

As used herein, "build material" refers to any material in particulate form suitable for additive manufacturing via xerography including a variety of thermoplastics or combinations of thermoplastics. Exemplary thermoplastics appropriate as build materials include, without limitation, Acrylonitrile butadiene styrene (ABS), Cross-linked polyethylene (PEX, XLPE), Ethylene vinyl acetate (EVA), Poly(methyl methacrylate) (PMMA), Polyacrylic acid (PAA), Polyamide (PA), Polybutylene (PB), Polybutylene terephthalate (PBT), Polycarbonate (PC), Polyetheretherketone (PEEK), Polyester (PEs), Polyethylene (PE), Polyethylene terephthalate (PET, PETE), Polyimide (PI)

Polylactic acid (PLA), Polyoxymethylene (POM), Polyphenyl ether (PPE), Polypropylene (PP), Polystyrene (PS), Polysulfone (PES), Polytetrafluoroethylene (PTFE), Polyurethane (PU), Polyvinyl chloride (PVC), Polyvinylidene chloride (PVDC), Styrene maleic anhydride (SMA), or Styrene-acrylonitrile (SAN).

The build material is provided in two different sizes and each size is delivered by separate xerographic engines to optimize fusing conditions. The first particle size has an effective particle diameter (approximating spherical shape) in a range from about 10 microns to about 20 microns, or from about 11 microns to about 20 microns. The second particle size has an effective particle diameter in a range from 4 to about 8 microns, or about 4 microns to about 7 microns. Those skilled in the art, with the benefit of this disclosure, will appreciate that appropriate pairing of sizes for the first and second build materials may be optimized such that any pairing within the ranges may be employed.

The transferring steps for the first build material and second build material are carried out in separate xerographic engines.

In embodiments, the methods disclosed herein may further comprise forming a support layer, the support layer formed by transferring a first support material having a first particle size to form a transferred first support material, and transferring a second support material on the transferred first support material to form the support layer, wherein a particle size of the second support material is smaller than the first support material, and wherein each transferring step for the first and second support material is performed by a xerographic engine. In embodiments, any given build layer may be formed on a support layer. In embodiments, any given support layer is formed on the build layer.

As used herein, a "support material" refers to a sacrificial material employed in additive manufacturing that serves as a scaffold to create overhanging features in a three-dimensional printed object. Support materials may be designed to melt away from the finished printed object or selectively dissolved in a solvent, allowing washing away of the support material leaving behind the printed three-dimensional object formed from the actual build material.

Support materials may be any appropriate material employed in the art including, without limitation, poloyglycolic acid (PGA) polymer, a thermoplastic copolymer comprising aromatic groups, (meth)acrylate-based ester groups, carboxylic acid groups, and anhydride groups, or any powder-based, soluble support material that is engineered for use in an electrophotography-based additive manufacturing system.

As used herein, a "build layer" refers to a single layer that comprises the fusion of at least two different particle sizes of build material. The two different size particles are transferred by separate xerographic engines, with the first particle having the larger particle size being transferred first and then "gap-filling" by transfer of the second smaller particle size build material. By analogy, a "support layer" is similarly assembled from two different particle sizes (or distribution thereof) of support material.

In embodiments, a given build layer may have a thickness from about 20 microns to about 50 microns. In embodiments, the build layer has a thickness from about 30 microns to about 40 microns. In embodiments, the support layer has a thickness from about 20 to about 50 microns. In embodiments, the support layer has a thickness from about 30 microns to about 40 microns.

There are provided additive manufacturing systems according to the claims, comprising a first xerographic engine configured to transfer a first build material, and a second xerographic engine configured to transfer a second build material, wherein a particle size of the second build material is smaller than the a particle size of the first build material.

In embodiments, systems may further comprise a third xerographic engine configured to transfer a first support material. In embodiments, systems may further comprise a fourth xerographic engine configured to transfer a second support material, wherein the particle size of the second support material is smaller than the particle size of the first support material.

There are provided methods of additive manufacturing according to the claims, comprising forming a plurality of build layers, each of the plurality of build layers formed by transferring a first build material having a particle size in a range from about 10 microns to about 20 microns, and transferring a second build material having a particle size in a range from about 4 microns to about 8 microns on the first build material to form one of the plurality of build layers, wherein each transfer step is performed by a separate xerographic engine.

In embodiments, methods may further comprise forming a support layer, the support layer formed by transferring a first support material having a first particle size, and transferring a second support material on the support material to form the support layer, wherein a particle size of the second support material is smaller than the first support material, and wherein each transfer step for the first and second support material is performed by a xerographic engine.

In embodiments, each of the transferring steps for the first and second support materials may be performed by a separate xerographic engine.

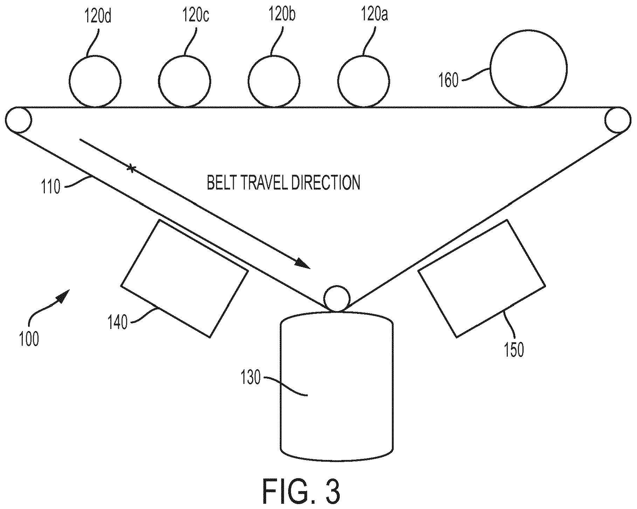

Referring now to Figure 3, there is shown a process scheme **100** for implementation of embodiments disclosed herein. A large particle sized build material is transferred onto the transfuse belt **110** in the nip of the belt and electrophotographic (EP) engine **120a.** As the belt rotates counter-clockwise, a smaller sized build material is transferred on top of the first build material at EP engine **120b.** In areas of the article that require a support material for a given layer, EP engine **120c** transfers a large size support material onto the transfer belt as is continues to rotate counter-clockwise. A smaller size support material in transferred on top of the large size material in EP engine **120d**. When the belt exits EP station **120d**, it has a completed part layer that comprises build material at two sizes, and optionally support material with two sizes (a layer may not need support material and only contain build material). It is unfused powder at this point. Once the belt delivers the powdered layer to a transfuse station **130**, the layer is transferred off transfuse belt **110** to a build tray (not shown) within transfuse station **130** using heat and pressure. Prior to deliver at transfuse station **130**, the transferred materials may be pre-heated at pre-heat station **140**. The build tray within transfuse station **130** may be configured to move back and forth, as well as up and down, to accept subsequent layers in constructing an article. The first layer of the article is transfused to the build tray, the rest of the layers are transfused onto the previous layers. After a layer is transfused, transfuse belt **110** continues rotating under a cooling station **150** and then through a cleaning station **160** to remove any residual material that might have stuck to the belt.

Each EP engine **120a-d** contains a development housing, photoreceptor, exposure device, charging device, and cleaning device. The set points within the engine are optimized in each engine based in the material type (build or support) and the size of the particles (large or small).
The following Examples are being submitted to illustrate embodiments of the present disclosure. These Examples are intended to be illustrative only and are not intended to limit the scope of the present disclosure. Also, parts and percentages are by weight unless otherwise indicated. As used herein, "room temperature" refers to a temperature of from about 20 °C to about 25 °C.

## Claims

1. A method of additive manufacturing using electrophotography comprising:
forming a plurality of build layers, each of the plurality of build layers formed by:
transferring a first build material to a conveyor (110); and
transferring a second build material on the first build material to form one of the plurality of build layers;
wherein each transfer step is performed by a separate xerographic engine (120a, 120b), and wherein the first build material has a particle size in the range from 10 microns to 20 microns and the second build material has a particle size in the range from 4 microns to 8 microns.

2. The method of claim 1, further comprising fusing the transferred first and second build materials in a transfuse station (130).

3. The method of claim 1, wherein the conveyor (110) is a belt (110) or a drum.

4. An electrophotographic additive manufacturing system comprising:
a first build material and a second build material;
a conveyor (110);
a first xerographic engine (120a) configured to transfer the first build material;
a second xerographic engine (120b) configured to transfer the second build material on
the first build material; and
a transfuse station (130) configured to fuse the first build material and second build material, wherein the first build material has a particle size in the range from 10 microns to 20 microns and the second build material has a particle size in the range from 4 microns to 8 microns.

5. The system of claim 4, further comprising a third xerographic engine (120c) configured to transfer a first support material.

6. The system of claim 5, further comprising a fourth xerographic engine (120d) configured to transfer a second support material on the first support material.

7. The system of claim 5, wherein the first support material is disposed on the conveyor (110) or on one of the plurality of build layers.

## Patentansprüche

1. Verfahren zur additiven Fertigung unter Verwendung von Elektrofotografie, umfassend:
Ausbilden einer Vielzahl von Aufbauschichten, wobei jede der Vielzahl von Aufbauschichten ausgebildet wird durch:
Übertragen eines ersten Aufbaumaterials auf eine Fördereinrichtung (110); und
Übertragen eines zweiten Aufbaumaterials auf das erste Aufbaumaterial, um eine der Vielzahl von Aufbauschichten auszubilden;
wobei jeder Übertragungsschritt von einer separaten xerografischen Maschine (120a, 120b) ausgeführt wird und das erste Aufbaumaterial eine Partikelgröße im Bereich von 10 Mikrometer bis 20 Mikrometer und das zweite Aufbaumaterial eine Partikelgröße im Bereich von 4 Mikrometer bis 8 Mikrometer aufweist.

2. Verfahren nach Anspruch 1, weiterhin umfassend das Verschmelzen des übertragenen ersten und zweiten Aufbaumaterials in einer Aufschmelzstation (130).

3. Verfahren nach Anspruch 1, bei dem die Fördereinrichtung (110) ein Band (110) oder eine Trommel ist.

4. Elektrophotographisches additives Fertigungssystem, umfassend:
ein erstes Aufbaumaterial und ein zweites Aufbaumaterial;
eine Fördereinrichtung (110);
eine erste xerographische Maschine (120a), die dazu eingerichtet ist, das erste Aufbaumaterial zu übertragen;
eine zweite xerographische Maschine (120b), die dazu eingerichtet ist, das zweite Aufbaumaterial auf das erste Aufbaumaterial zu übertragen; und
eine Aufschmelzstation (130), die dazu eingerichtet ist, das erste Aufbaumaterial und das zweite Aufbaumaterial zu verschmelzen, wobei das erste Aufbaumaterial eine Partikelgröße im Bereich von 10 Mikrometer bis 20 Mikrometer und das zweite Aufbaumaterial eine Partikelgröße im Bereich von 4 Mikrometer bis 8 Mikrometer aufweist.

5. System nach Anspruch 4, weiterhin umfassend eine dritte xerographische Maschine (120c), die dazu eingerichtet ist, ein erstes Trägermaterial zu übertragen.

6. System nach Anspruch 5, weiterhin umfassend eine vierte xerographische Maschine (120d), die dazu eingerichtet ist, ein zweites Trägermaterial auf das erste Trägermaterial zu übertragen.

7. System nach Anspruch 5, bei dem das erste Trägermaterial auf der Fördereinrichtung (110) oder auf einer der Vielzahl der Aufbauschichten angeordnet ist.

## Revendications

1. Procédé de fabrication d'additif utilisant une électrophotographie, comprenant :
la formation d'une pluralité de couches de construction, chacune parmi la pluralité de couches de construction étant formée par :
transfert d'un premier matériau de construction sur un convoyeur (110) ; et
transfert d'un deuxième matériau de construction sur le premier matériau de construction pour former l'une parmi la pluralité de couches de construction ;
dans lequel chaque étape de transfert est effectuée par un moteur xérographique séparé (120a, 120b), et dans lequel le premier matériau de construction a une granulométrie située dans la plage allant de 10 micromètres à 20 micromètres et le deuxième matériau de construction a une granulométrie située dans la plage allant de 4 micromètres à 8 micromètres.

2. Procédé selon la revendication 1, comprenant en outre la fusion des premier et deuxième matériaux de construction transférés dans un poste de transfusion (130).

3. Procédé selon la revendication 1, dans lequel le convoyeur (110) est une courroie (110) ou un tambour.

4. Système de fabrication d'additif électrophotographique comprenant :
un premier matériau de construction et un deuxième matériau de construction ;
un convoyeur (110) ;
un premier moteur xérographique (120a) configuré pour transférer le premier matériau de construction ;
un deuxième moteur xérographique (120b) configuré pour transférer le deuxième matériau de construction sur le premier matériau de construction ; et
un poste de transfusion (130) configuré pour fondre le premier matériau de construction et le deuxième matériau de construction, dans lequel le premier matériau de construction a une granulométrie située dans la plage allant de 10 micromètres à 20 micromètres et le deuxième matériau de construction a une granulométrie située dans la plage allant de 4 micromètres à 8 micromètres.

5. Système selon la revendication 4, comprenant en outre un troisième moteur xérographique (120c) configuré pour transférer un premier matériau de support.

6. Système selon la revendication 5, comprenant en outre un quatrième moteur xérographique (120d) configuré pour transférer un deuxième matériau de support sur le premier matériau de support.

7. Système selon la revendication 5, dans lequel le premier matériau de support est disposé sur le convoyeur (110) ou sur l'une parmi la pluralité de couches de construction.
